# EUROPEAN PATENT APPLICATION

(11) **EP 4 207 353 A1**
(43) Date of publication of application: **05.07.2023**
(21) Application number: 20964769.2
(22) Date of filing: 11.12.2020
(51) Int. Cl.: H01M 4/131

(54) **ELECTROCHEMICAL DEVICE AND ELECTRONIC DEVICE**

(71) Applicant: Dongguan Amperex Technology Limited, Dongguan, Guangdong 523808 (CN)
(72) Inventor: JIANG, Bing, Dongguan, Guangdong 523808 (CN); LIU, Tao, Dongguan, Guangdong 523808 (CN)
(74) Representative: Icosa
(86) International application number: PCT/CN2020/135882
(87) International publication number: WO 2022/120833

(57) **Abstract**

An electrochemical apparatus and an electronic apparatus are disclosed. The electrochemical apparatus includes a negative electrode. The negative electrode includes a current collector, a first coating, and a second coating, the second coating is provided on at least one surface of the current collector, and the first coating is provided between the current collector and the second coating and contains inorganic particles with a Mohs hardness of 2 to 7. This improves the strength of the current collector and the adhesion between the current collector and the second coating, and reduces the proportion of the binder in the second coating, increasing the proportion of a negative electrode active material in the negative electrode and thus effectively improving the energy density of the electrochemical apparatus.

## Description

### TECHNICAL FIELD

This application relates to the electrochemical field, and specifically, to an electrochemical apparatus and an electronic apparatus.

### BACKGROUND

Lithium-ion batteries have advantages such as high energy storage density, high open-circuit voltage, low self-discharge rate, long cycle life, and high safety, and therefore are widely used in various fields such as electric energy storage, mobile electronic devices, electric vehicles, and aerospace equipment. As mobile electronic devices and electric vehicles enter a stage of rapid development, the market requires lithium-ion batteries to have higher energy density, safety, and cycling performance, and longer service life.

In cycling of a lithium-ion battery, a negative electrode active material layer is likely to peel off from negative electrode current collector. To resolve this problem, a conductive coating including a conductive agent and a binder is generally provided in the prior art. However, the adhesion of the conductive coating cannot meet current needs, and the negative electrode active material layer still peels off. In addition, the insufficient strength of the negative electrode current collector (copper foil) may usually cause the copper foil to break during cold pressing, which affects production efficiency. Also, the insufficient strength of the copper foil causes swelling of a negative electrode plate swells during the cycling of the lithium-ion battery to squeeze a positive electrode plate, resulting in breakage of an inner ring of the positive electrode plate and leading to a low capacity of the lithium-ion battery. Therefore, the strength of negative electrode current collectors and the adhesion between negative electrode current collectors and negative electrode active material layers need to be increased urgently.

### SUMMARY

This application is intended to provide an electrochemical apparatus and an electronic apparatus, so as to increase the strength of negative electrode current collectors and the adhesion between negative electrode current collectors and negative electrode active material layers. Specific technical solutions are as follows:

It should be noted that an example in which a lithium-ion battery is used as an electrochemical apparatus is used to illustrate this application below. However, the electrochemical apparatus in this application is not limited to the lithium-ion battery.

A first aspect of this application provides an electrochemical apparatus, including a negative electrode, where the negative electrode includes a current collector, a first coating, and a second coating; the second coating is provided on at least one surface of the current collector, and the first coating is provided between the current collector and the second coating, the first coating contains inorganic particles, a Mohs hardness of the inorganic particles being 2 to 7.

In this application, the second coating may also be understood as a negative electrode active material layer.

In the electrochemical apparatus of an embodiment of this application, the first coating is provided between the current collector and the second coating, the first coating includes the inorganic particles, and the inorganic particles are wrapped by a binder to form an adhesion unit with higher strength. The strength of the adhesion unit is affected by the Mohs hardness of the inorganic particles. When the hardness of the inorganic particles is too low, deformation is likely to occur in cold pressing, causing the stability of the internal structure of the first coating to deteriorate, and thus affecting the strength of the adhesion unit. When the hardness of the inorganic particles is too high, much wear is caused to a coating device. Firstly, the adhesion unit with a higher strength can increase the cohesion of the first coating, and the cohesion can offset part of the tensile stress of the current collector, increasing the strength of the current collector, thereby making it less likely for the current collector to break in processing. Secondly, the formation of the adhesion unit increases the adhesion strength and adhesion sites of the first coating, thereby effectively increasing the adhesion between the current collector and the second coating. The increase of the adhesion between the first coating and the second coating can reduce the amount of the binder in the second coating and increase the proportion of a negative electrode active material in the second coating, thereby increasing the energy density of lithium-ion batteries.

It should be understood by persons skilled in the art that the negative electrode of this application may have the first coating and the second coating on one or two surfaces of the negative electrode. Persons skilled in the art may make selection depending on an actual need.

The electrochemical apparatus provided in this application includes the negative electrode, the negative electrode includes the current collector, the first coating, and the second coating, the first coating is provided between the negative electrode current collector and the second coating, and the first coating contains the inorganic particles with a Mohs hardness of 2 to 7. The first coating can effectively increase the strength of the current collector and the adhesion between the current collector and the second coating, reducing the amount of the binder in the second coating and increasing the proportion of a negative electrode active material in the negative electrode, thereby effectively increasing the energy density of lithium-ion batteries.

In this application, the inorganic particles are not limited to a particular type provided that the Mohs hardness is within the range of 2 to 7 and that the objectives of this application can be achieved. For example, the inorganic particles may include at least one of boehmite, aluminum powder, quartz sand, apatite, zircon, or the like.

In an embodiment of this application, median particle size Dᵥ50 of the inorganic particles is 100 nm to 600 nm. The median particle size Dᵥ50 of the inorganic particles being larger than 100 nm can avoid agglomeration of the inorganic particles. The median particle size Dᵥ50 of the inorganic particles being larger than 600 nm makes the surface of the first coating uneven, affecting the performance of lithium-ion batteries. The median particle size Dᵥ50 of the inorganic particles being controlled within the above range can ensure that the thickness of the first coating is maintained at a nanometer level, so as not to increase the thickness of the negative electrode, thereby avoiding loss of the volumetric energy density of lithium-ion batteries. In addition, nanoparticles can ensure the evenness of the surface of the first coating, and therefore the performance of lithium-ion batteries is not affected.

In an embodiment of this application, the first coating further includes a conductive agent, a binder, and a dispersant, and based on total mass of the first coating, a mass ratio of the inorganic particles, the conductive agent, the binder, and the dispersant is (1%-10%):(14%-70%):(14%-70%):(2%-6%).

When mass of the inorganic particles accounts for less than 1% of the total mass of the first coating, the high strength of the inorganic particles is not reflected. When mass of the inorganic particles accounts for more than 10% of the total mass of the first coating, the inorganic particles are difficult to disperse and prone to agglomeration.

When mass of the binder accounts for less than 14% of the total mass of the first coating, adhesion is small. When mass of the binder accounts for more than 70% of the total mass of the first coating, the binder is too large in amount, causing agglomeration of the inorganic particles.

Mass of the dispersant in the total mass of the first coating being controlled within 2% to 6% can make the internal structure of the first coating uniform and stable, thereby effectively preventing agglomeration of the inorganic particles.

Mass of the conductive agent in the total mass of the first coating being controlled within 14% to 70% improves the conductivity of the negative electrode. In an embodiment of this application, the conductive agent may include at least one of zero-dimensional conductive agent or one-dimensional conductive agent.

In this application, the zero-dimensional conductive agent and the one-dimensional conductive agent are not limited to a particular type provided that the objectives of this application can be achieved. For example, the zero-dimensional conductive agent may include at least one of conductive carbon black, acetylene black, superconducting carbon black, granular graphite, Ketjen black, or the like. The median particle size Dᵥ50 of the zero-dimensional conductive agent is smaller than 400 nm. The one-dimensional conductive agent may include at least one of conductive carbon tube, conductive carbon rod, or the like. The average diameter of the one-dimensional conductive agent is smaller than 400 nm. The addition of the conductive agent added can improve the conductivity of the negative electrode. With the median particle size or the average diameter of the conductive agent controlled within the above range, the thickness of the first coating can be effectively controlled, thereby avoiding loss of the volumetric energy density of lithium-ion batteries.

In this application, the binder is not limited to a particular type provided that the objectives of this application can be achieved. For example, the binder may include at least one of styrene-butadiene rubber, polyacrylic acid, polyvinyl alcohol, polyethylene glycol, polyacrylate ester, polyvinylidene fluoride, polyvinyl chloride, formaldehyde resin, cyclodextrin, cyanoacrylate, or the like. The addition of the binder can improve the viscosity of the first coating, thereby increasing both the adhesion between the first coating and the negative electrode current collector and the adhesion between the first coating and the second coating, and reducing the amount of the binder in the second coating.

In this application, the dispersant is not limited to a particular type provided that the objectives of this application can be achieved. For example, the dispersant may include at least one of sodium hydroxymethyl cellulose, lithium hydroxymethyl cellulose, sodium alginate, propylene glycol alginate, methylcellulose, starch sodium phosphate, sodium carboxymethyl cellulose, sodium alginate protein, casein, sodium polyacrylate, polyoxyethylene, polyvinylpyrrolidone, or the like. The addition of the dispersant can improve the uniformity and stability of the internal structure of the first coating, thereby preventing aggregation of the inorganic particles.

In this application, with the first coating provided, the tensile strength of the negative electrode is 200 MPa to 500 MPa, which is a significant increase.

In an embodiment of this application, thickness of the first coating is 280 nm to 1500 nm. With the thickness of the first coating controlled within the above range, an increase in the thickness of the negative electrode can be effectively controlled, thereby improving the energy density of lithium-ion batteries.

In an embodiment of this application, coating weight X of the first coating satisfies 0.02 mg/cm² ≤ X ≤ 0.15 mg/cm². With the coating weight of the first coating controlled within the above range, the thickness and coating uniformity of the first coating can be effectively controlled and the performance of the first coating can be effectively improved, thereby increasing the energy density of lithium-ion batteries.

In an embodiment of this application, cover rate of the first coating is 50% to 100%. With the cover rate of the first coating controlled to 50% or above, the first coating can effectively play its functions so that the performance of lithium-ion batteries can be improved.

In an embodiment of this application, electronic resistance of the negative electrode is 30 mΩ to 60 mΩ. It can be learned that the electronic resistance of the negative electrode in this application is large so that the polarization of lithium-ion batteries is increased and less electrical energy is discharged, thereby improving the safety of lithium-ion batteries.

In an embodiment of this application, elongation rate of the negative electrode is 0.05% to 1%. With a low elongation rate, the negative electrode is stable in structure and state.

In the negative electrode of this application, the current collector is not particularly limited, and a current collector well-known in the art may be used, for example, copper foil, aluminum foil, aluminum alloy foil, or composite current collector. The negative electrode active material layer includes a negative electrode active material. The negative electrode active material is not particularly limited, and a negative electrode active material well-known in the art may be used. For example, the negative electrode active material may include at least one of artificial graphite, natural graphite, mesocarbon microbeads, silicon, silicon carbon, silicon-oxygen compound, soft carbon, hard carbon, lithium titanate, niobium titanate, or the like. In this application, the current collector and the negative electrode active material layer are not limited to a particular thickness provided that the objectives of this application can be achieved. For example, the thickness of the current collector is 6 µm to 10 µm, and the thickness of the negative electrode active material layer is 30 µm to 120 µm.

The positive electrode in this application is not particularly limited, provided that the objectives of this application can be achieved. For example, the positive electrode generally contains a current collector and a positive electrode active material layer. The current collector is not particularly limited and may be a positive electrode current collector well-known in the art, for example, copper foil, aluminum foil, aluminum alloy foil, or composite current collector. The positive electrode active material layer includes a positive electrode active material. The positive electrode active material is not particularly limited and may be a positive electrode active material well-known in the art, for example, at least one of lithium nickel cobalt manganese oxide (811, 622, 523, 111), lithium nickel cobalt aluminate, lithium iron phosphate, lithium-rich manganese-based material, lithium cobalt oxide, lithium manganate, lithium iron manganese phosphate, or lithium titanate. In this application, the positive electrode current collector and the positive electrode active material layer are not limited to a particular thickness provided that the objectives of this application can be achieved. For example, the thickness of the positive electrode current collector is 8 µm to 12 µm, and the thickness of the positive electrode active material layer is 30 µm to 120 µm.

Optionally, the positive electrode may further include a conductive layer. The conductive layer is sandwiched between the current collector and the positive electrode active material layer. The conductive layer is not limited to a particular composition, and may be a common conductive layer in the art. The conductive layer includes a conductive agent and a binder.

The lithium-ion battery of this application further includes a separator for separating the positive electrode and the negative electrode to prevent a short circuit inside the lithium-ion battery, and allow free passage of electrolyte ions so as to implement electrochemical charge/discharge. In this application, the separator is not particularly limited, provided that the objectives of this application can be achieved.

For example, the separator is at least one of polyethylene (PE) and polypropylene (PP)-based polyolefin (PO) separator, polyester film (for example, polyethylene terephthalate (PET) film), cellulose film, polyimide film (PI), polyamide film (PA), spandex or aramid film, woven film, non-woven film (non-woven fabric), microporous film, composite film, separator paper, laminated film, spinning film, or the like.

For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, polyimide, or the like. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by mixing a polymer and an inorganic substance.

For example, the inorganic substance layer includes inorganic particles and a binder. The inorganic particles are not particularly limited, and for example, may be selected from at least one of aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and for example, may be selected from a combination of one or more of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer contains a polymer, and the polymer is made of at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), or the like.

The lithium-ion battery in this application further includes an electrolyte. The electrolyte may be one or more of a gel electrolyte, a solid electrolyte, and a liquid electrolyte. The liquid electrolyte includes a lithium salt and a non-aqueous solvent.

In some embodiments of this application, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ may be selected as the lithium salt because it can provide high ionic conductivity and improve the cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-trifluoroMethyl ethylence carbonate, or a combination thereof.

An example of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, or a combination thereof.

A second aspect of this application provides an electronic apparatus including the electrochemical apparatus according to the first aspect of this application.

The electronic apparatus in this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

A process for preparing the electrochemical apparatus is well known to persons skilled in the art, and is not particularly limited in this application. For example, the electrochemical apparatus may be manufactured in the following process: The positive electrode and the negative electrode are stacked with the separator therebetween, and are put into a housing after operations such as winding and folding as needed, an electrolyte is injected into the housing, and the housing is sealed. In addition, an overcurrent prevention element, a guide plate, and the like may be placed in the housing as needed, so as to prevent pressure increase, overcharge, and overdishcarge in the electrochemical apparatus.

This application provides the electrochemical apparatus and the electronic apparatus. The electrochemical apparatus includes the negative electrode. The negative electrode includes the current collector, the first coating, and the second coating, the second coating is provided on at least one surface of the current collector, and the first coating is provided between the current collector and the second coating and contains the inorganic particles with a Mohs hardness of 2 to 7. This improves the strength of the current collector and the adhesion between the current collector and the second coating, and reduces the proportion of the binder in the second coating, increasing the proportion of a negative electrode active material in the negative electrode and thus effectively improving the energy density of the electrochemical apparatus.

### BRIEF DESCRIPTION OF DRAWINGS

To describe the technical solutions in this application and the prior art more clearly, the following briefly describes the accompanying drawings required for describing the embodiments and the prior art. Apparently, the accompanying drawings in the following description show merely some embodiments of this application.

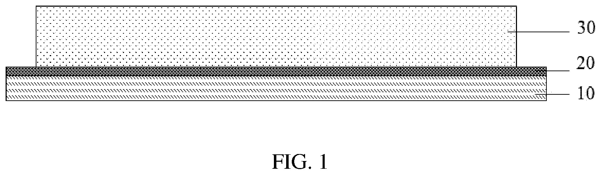

FIG. 1 is a schematic structural diagram of a negative electrode plate according to an embodiment of this application.

Reference signs: 10. current collector, 20. first coating, and 30. second coating.

### DETAILED DESCRIPTION

To make the objectives, technical solutions, and advantages of this application more comprehensible, the following describes this application in detail with reference to accompanying drawings and embodiments. Apparently, the described embodiments are merely some rather than all of the embodiments of this application. All other technical solutions obtained by persons of ordinary skill in the art based on the embodiments of this application shall fall within the protection scope of this application.

It should be noted that in specific embodiments of this application, an example in which a lithium-ion battery is used as an electrochemical apparatus is used to illustrate this application. However, the electrochemical apparatus in this application is not limited to the lithium-ion battery.

FIG. 1 is a schematic structural diagram of a negative electrode according to an embodiment of this application. A first coating 20 is provided between a current collector 10 and a second coating 30. Certainly, the first coating 20 and the second coating 30 may alternatively be provided on the other side of the current collector 10.

### Examples

The following describes the embodiments of this application more specifically by using examples and comparative examples. Various tests and evaluations were performed in the following methods. In addition, unless otherwise specified, "part" and "%" are based on weight.

### Test method and device

### Test method for median particle size Dᵥ50 of inorganic particles

A laser particle size analyzer MS3000 of Malvern was used to test the median particle size Dᵥ50 of inorganic particles.

Dᵥ50 is a particle size of inorganic particles where the cumulative distribution of the inorganic particles by volume reaches 50% as counted from the small particle size side, in other words, a volume of inorganic particles with a particle size less than this particle size accounts for 50% of a total volume of the inorganic particles.

### Thickness test for first coating and second coating

(1) A negative electrode plate coated with a first coating and a second coating was taken from a finished lithium-ion battery.
(2) The negative electrode plate obtained in (1) was cut along a thickness direction of the negative electrode plate by using the plasma cutting technology to obtain a cross section of the first coating and the second coating.
(3) The cross section of the first coating and the second coating obtained in (2) was observed under a SEM (scanning electron microscope) (the cross section observed needed to have a length not smaller than 2 cm), to separately test the thickness of the first coating and the second coating under the SEM, with 15 or more different positions tested for each layer, and the average thickness value of all tested positions of each layer was recorded as the thickness value of the corresponding layer.

### Test method for cover rate of first coating

The actual area of the electrode plate was denoted as S1.

The electrode plate was soaked in deionized water for 2 h, an upper graphite layer on the electrode plate was wiped away, and the area of the first coating exposed was denoted as S2.

The cover rate B of the first coating was calculated by using the following expression: B = S2/S1 × 100%

### Test method for elongation rate of negative electrode

(1) A lithium-ion battery discharged to 0% SOC was disassembled so as to take a negative electrode plate, and the width L1 of the negative electrode plate was tested.
(2) The lithium-ion battery was charged to 100% SOC and then disassembled so as to take the negative electrode plate, and the width L2 of the negative electrode plate was tested.
(3) The elongation rate of the negative electrode was calculated in the following method: (L2 - L1)/L1 × 100%.

SOC is a state of charge of the negative electrode, and may also be referred to as remaining power, indicating a percentage of the remaining dischargeable power of the negative electrode in the power corresponding to the fully charged state after the battery is used for a period of time or not used for a long time. 100% SOC means that the negative electrode is at the fully charged state, and 0% SOC means that the negative electrode is at zero charge of state.

### Test method for tensile strength of negative electrode

(1) A 150 mm×20 mm negative electrode plate was prepared.
(2) Two narrower ends were respectively placed at two ends of a Gotech tensile machine, and fastened thereto.
(3) The Gotech tensile machine was started to stretch the negative electrode plate obtained in (1).

When the negative electrode plate broke, the data was recorded as the tensile strength.

### Cycling performance test

At a test temperature of 25°C/45°C, the lithium-ion battery was charged to 4.4 V at a constant current of 0.7C, charged to 0.025C at a constant voltage, left standing for 5 minutes, and then discharged to 3.0 V at 0.5C. A capacity obtained in this cycle was the initial capacity. Then, a 0.7C charge and 0.5C discharge cycling test was performed. A ratio of the capacity of each cycle to the initial capacity was calculated to obtain a capacity degradation curve. The number of cycles to a capacity retention rate of 90% at 25°C was recorded as cycling performance of the lithium-ion battery under room temperature; and the number of cycles to a capacity retention rate of 80% at 45°C was recorded as cycling performance of the lithium-ion battery under high temperature. The numbers of cycles in the above two cases were compared to obtain cycling performance of the material.

### Discharging rate test

At 25°C, the lithium-ion battery was discharged to 3.0 V at 0.2C, left standing for 5 min, charged to 4.45 V at 0.5C, charged to 0.05C at a constant voltage, and left standing for 5 minutes, and the rate was adjusted to 0.2C, 0.5C, 1C, 1.5C, and 2.0C and discharge tests were performed under these rates to obtain respective discharge capacities. The capacity obtained at each rate was compared with the capacity obtained at 0.2C, and the percentage at 2C and the percentage at 0.2C were compared to compare rate performance.

### Example 1

### <Preparation of first coating slurry>

Conductive carbon and sodium hydroxymethyl cellulose were placed into a mixing tank to be dispersed evenly, with a specific amount of deionized water added to accelerate dispersion. After the sodium hydroxymethyl cellulose was fully dissolved without gel block, a specific amount of boehmite was added, and the three substances were then mixed and dispersed. Finally, styrene-butadiene rubber was added, and the four substances were then dispersed. A mass ratio of the conductive carbon, the sodium hydroxymethyl cellulose, the boehmite, and the styrene-butadiene rubber was 44:4:2:50. The Mohs hardness of the boehmite was 3, and Dᵥ50 thereof was 100 nm.

### <Preparation of negative electrode plate containing first coating>

The first coating slurry prepared was applied on a surface of a negative electrode current collector copper foil to obtain a first coating with a thickness of 280 nm, and the first coating had a cover rate of 50% and a coating weight of 0.02 mg/cm².

A negative electrode active material graphite, a styrene-butadiene polymer, and sodium carboxymethyl cellulose were mixed at a mass ratio of 97.5:1.3:1.2, with deionized water added as a solvent, so as to prepare a slurry with a solid content of 70%, where the slurry was stirred evenly. The slurry was evenly applied on the first coating, dried at 110°C, and cold pressed so as to obtain a negative electrode plate with a single surface coated with the first coating and a negative electrode active material layer, where the negative electrode active material layer was 150 µm in thickness.

After the foregoing steps were completed, the same method was used to complete these steps on the back of the negative electrode plate so as to obtain the negative electrode plate with two surfaces coated. After coating was completed, the negative electrode plate was cut into a size of 76 mm×851 mm and then welded with a tab for later use.

### <Preparation of positive electrode plate>

A positive electrode active material lithium cobalt oxide (LiCoO₂), conductive carbon black (Super P), and polyvinylidene fluoride (PVDF) were mixed at a weight ratio of 97.5:1.0:1.5, with N-methylpyrrolidone (NMP) added, so as to prepare a slurry with a solid content of 75%, where the slurry was stirred uniform. The slurry was evenly applied on a positive electrode current collector aluminum foil with a thickness of 10 µm and dried at 90°C so as to obtain a positive electrode plate with a coating thickness of 110 µm. After the foregoing steps were completed, single surface coating of the positive electrode plate was completed. Then, the foregoing steps were repeated on the other surface of the positive electrode plate so as to obtain a positive electrode plate with two surfaces coated with the positive electrode active material. After coating was completed, the electrode plate was cut into a size of 38 mm×58 mm for later use.

### <Preparation of electrolyte>

In a dry argon atmosphere, organic solvents ethylene carbonate, ethyl methyl carbonate, and diethyl carbonate were mixed at a mass ratio of EC:EMC:DEC=30:50:20 to obtain an organic solution, and then a lithium salt lithium hexafluorophosphate was added to the organic solvents for dissolving and uniform mixing, so as to obtain an electrolyte with a lithium salt concentration of 1.15 mol/L.

### <Preparation of separator>

Aluminum oxide and polyvinylidene fluoride were mixed at a mass ratio of 90:10 and dissolved in deionized water so as to form a ceramic slurry with a solid content of 50%. Then the ceramic slurry was evenly coated on one surface of a porous substrate (made of polyethylene, and having a thickness of 7 µm, an average pore diameter of 0.073 µm, and a porosity of 26%) through the micro-gravure coating method, and dried so as to obtain a double-layer structure including a ceramic coating and the porous substrate. The thickness of the ceramic coating was 50 µm.

Polyvinylidene fluoride (PVDF) and polyacrylate were mixed at a mass ratio of 96:4 and dissolved in deionized water so as to form a polymer slurry with a solid content of 50%. Then, the polymer slurry was evenly applied on two surfaces of the double-layer structure including the ceramic coating and the porous substrate through the micro-gravure coating method, and dried so as to obtain a separator. The thickness of a single-layer coating formed by the polymer slurry was 2 µm.

### <Preparation of lithium-ion battery>

The positive electrode plate, the separator, and the negative electrode plate prepared above were stacked in sequence, so that the separator was sandwiched between the positive and negative electrode plates for separation, and were wound to obtain an electrode assembly. The electrode assembly was put into an aluminum-plastic film packaging bag, and was dehydrated at 80°C, and the prepared electrolyte was injected. Then, after processes including vacuum sealing, standing, formation, and shaping, a lithium-ion battery was obtained.

### Example 2

This example was the same as Example 1 except that aluminum powder with a Mohs hardness of 2 was used to replace the boehmite with a Mohs hardness of 3 in <Preparation of first coating slurry>.

### Example 3

This example was the same as Example 1 except that quartz sand with a Mohs hardness of 7 was used to replace the boehmite with a Mohs hardness of 3 in <Preparation of first coating slurry>.

### Example 4

This example was the same as Example 1 except that zircon with a Mohs hardness of 6.5 was used to replace the boehmite with a Mohs hardness of 3 in <Preparation of first coating slurry>.

### Example 5

This example was the same as Example 1 except that apatite with a Mohs hardness of 5 was used to replace the boehmite with a Mohs hardness of 3 in <Preparation of first coating slurry>.

### Example 6

This example was the same as Example 1 except that nanoceramics with a Mohs hardness of 7 were used to replace the boehmite with a Mohs hardness of 3 in <Preparation of first coating slurry>.

### Example 7

This example was the same as Example 1 except that Dᵥ50 of boehmite was 200 nm in <Preparation of first coating slurry> and that the thickness of the first coating was 380 nm in <Preparation of negative electrode plate containing first coating>.

### Example 8

This example was the same as Example 1 except that Dᵥ50 of boehmite was 300 nm in <Preparation of first coating slurry> and that the thickness of the first coating was 520 nm in <Preparation of negative electrode plate containing first coating>.

### Example 9

This example was the same as Example 1 except that Dᵥ50 of boehmite was 400 nm in <Preparation of first coating slurry> and that the thickness of the first coating was 1000 nm in <Preparation of negative electrode plate containing first coating>.

### Example 10

This example was the same as Example 1 except that Dᵥ50 of boehmite was 500 nm in <Preparation of first coating slurry> and that the thickness of the first coating was 1200 nm in <Preparation of negative electrode plate containing first coating>.

### Example 11

This example was the same as Example 1 except that Dᵥ50 of boehmite was 600 nm in <Preparation of first coating slurry> and that the thickness of the first coating was 1500 nm in <Preparation of negative electrode plate containing first coating>.

### Example 12

This example was the same as Example 1 except that the thickness of the first coating was 520 nm in <Preparation of negative electrode plate containing first coating>.

### Example 13

This example was the same as Example 7 except that the thickness of the first coating was 520 nm in <Preparation of negative electrode plate containing first coating>.

### Example 14

This example was the same as Example 9 except that the thickness of the first coating was 520 nm in <Preparation of negative electrode plate containing first coating>.

### Example 15

This example was the same as Example 8 except that the thickness of the first coating was 380 nm in <Preparation of negative electrode plate containing first coating>.

### Example 16

This example was the same as Example 8 except that the thickness of the first coating was 1000 nm in <Preparation of negative electrode plate containing first coating>.

### Example 17

This example was the same as Example 8 except that the thickness of the first coating was 1200 nm in <Preparation of negative electrode plate containing first coating>.

### Example 18

This example was the same as Example 1 except that the mass ratio of conductive carbon, sodium hydroxymethyl cellulose, boehmite, and styrene-butadiene rubber was 44:4:3:49 in <Preparation of first coating slurry>.

### Example 19

This example was the same as Example 1 except that the mass ratio of conductive carbon, sodium hydroxymethyl cellulose, boehmite, and styrene-butadiene rubber was 44:4:4:48 in <Preparation of first coating slurry>.

### Example 20

This example was the same as Example 1 except that the mass ratio of conductive carbon, sodium hydroxymethyl cellulose, boehmite, and styrene-butadiene rubber was 44:4:5:47 in <Preparation of first coating slurry>.

### Example 21

This example was the same as Example 1 except that the mass ratio of conductive carbon, sodium hydroxymethyl cellulose, boehmite, and styrene-butadiene rubber was 44:4:6:46 in <Preparation of first coating slurry>.

### Example 22

This example was the same as Example 1 except that the mass ratio of conductive carbon, sodium hydroxymethyl cellulose, boehmite, and styrene-butadiene rubber was 70:6:10:14 in <Preparation of first coating slurry>.

### Example 23

This example was the same as Example 1 except that the mass ratio of conductive carbon, sodium hydroxymethyl cellulose, boehmite, and styrene-butadiene rubber was 25:4:1:70 in <Preparation of first coating slurry>.

### Example 24

This example was the same as Example 1 except that the mass ratio of conductive carbon, sodium hydroxymethyl cellulose, boehmite, and styrene-butadiene rubber was 14:6:10:70 in <Preparation of first coating slurry>.

### Example 25

This example was the same as Example 1 except that the mass ratio of conductive carbon, sodium hydroxymethyl cellulose, boehmite, and styrene-butadiene rubber was 55:2:4:39 in <Preparation of first coating slurry>.

### Example 26

This example was the same as Example 1 except that the cover rate of the first coating was 60% in <Preparation of negative electrode plate containing first coating>.

### Example 27

This example was the same as Example 1 except that the cover rate of the first coating was 70% in <Preparation of negative electrode plate containing first coating>.

### Example 28

This example was the same as Example 1 except that the cover rate of the first coating was 80% in <Preparation of negative electrode plate containing first coating>.

### Example 29

This example was the same as Example 1 except that the cover rate of the first coating was 90% in <Preparation of negative electrode plate containing first coating>.

### Example 30

This example was the same as Example 1 except that the cover rate of the first coating was 100% in <Preparation of negative electrode plate containing first coating>.

### Example 31

This example was the same as Example 1 except that the coating weight of the first coating was 0.05 mg/cm² in <Preparation of negative electrode plate containing first coating>.

### Example 32

This example was the same as Example 1 except that the coating weight of the first coating was 0.08 mg/cm² in <Preparation of negative electrode plate containing first coating>.

### Example 33

This example was the same as Example 1 except that the coating weight of the first coating was 0.1 mg/cm² in <Preparation of negative electrode plate containing first coating>.

### Example 34

This example was the same as Example 1 except that the coating weight of the first coating was 0.13 mg/cm² in <Preparation of negative electrode plate containing first coating>.

### Example 35

This example was the same as Example 1 except that the coating weight of the first coating was 0.14 mg/cm² in <Preparation of negative electrode plate containing first coating>.

### Example 36

This example was the same as Example 1 except that the coating weight of the first coating was 0.06 mg/cm² in <Preparation of negative electrode plate containing first coating>.

### Example 37

This example was the same as Example 1 except that the coating weight of the first coating was 0.15 mg/cm² in <Preparation of negative electrode plate containing first coating>.

### Comparative Example 1

This example was the same as Example 1 except that in <Preparation of first coating slurry>, aluminum oxide with a Mohs hardness of 9 was used to replace the boehmite with a Mohs hardness of 3 and the mass ratio of conductive carbon, sodium hydroxymethyl cellulose, aluminum oxide, and styrene-butadiene rubber was 44:4:4:48, and that in <Preparation of negative electrode plate containing first coating>, the cover rate of the first coating was 90% and the coating weight of the first coating was 0.08 mg/cm².

### Comparative Example 2

This example was the same as Comparative Example 1 except that the mass ratio of conductive carbon, sodium hydroxymethyl cellulose, aluminum oxide, and styrene-butadiene rubber was 44:4:0:52 in <Preparation of first coating slurry>.

The preparation parameters and test results of examples and comparative examples are shown in Tables 1-5

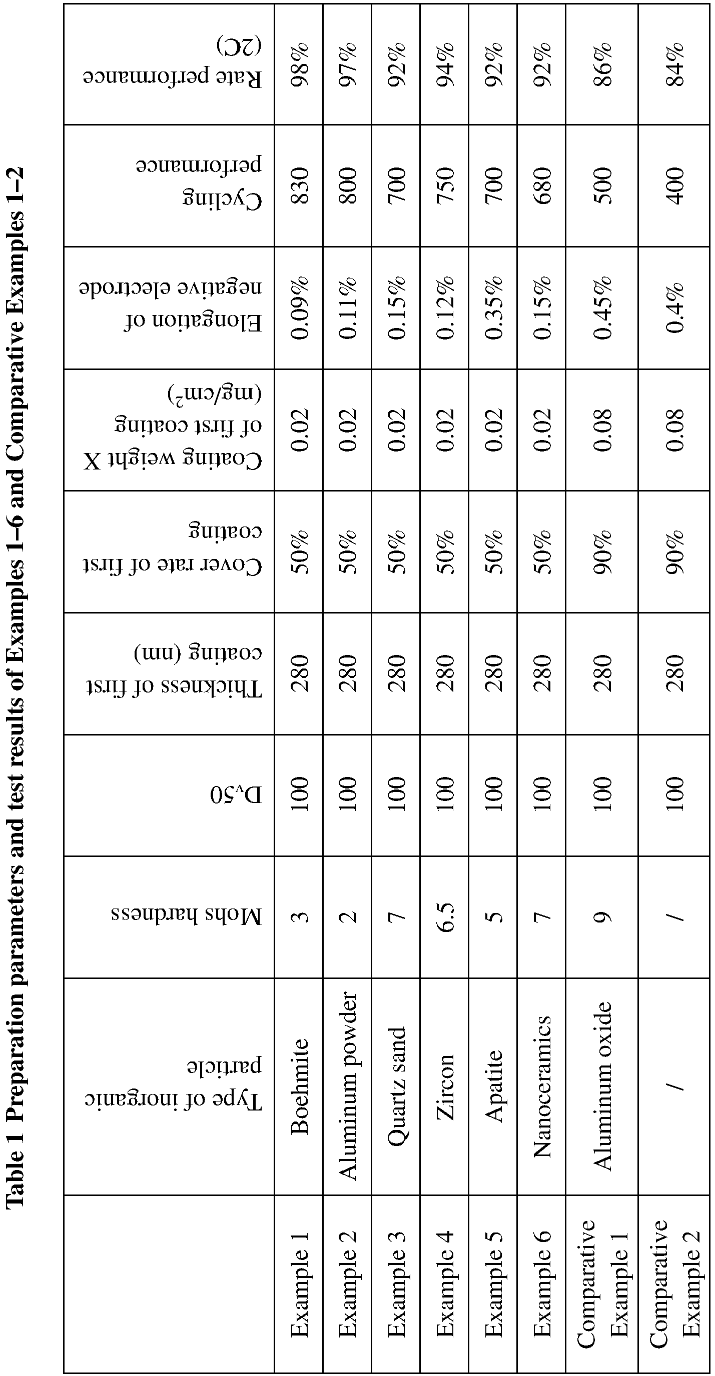

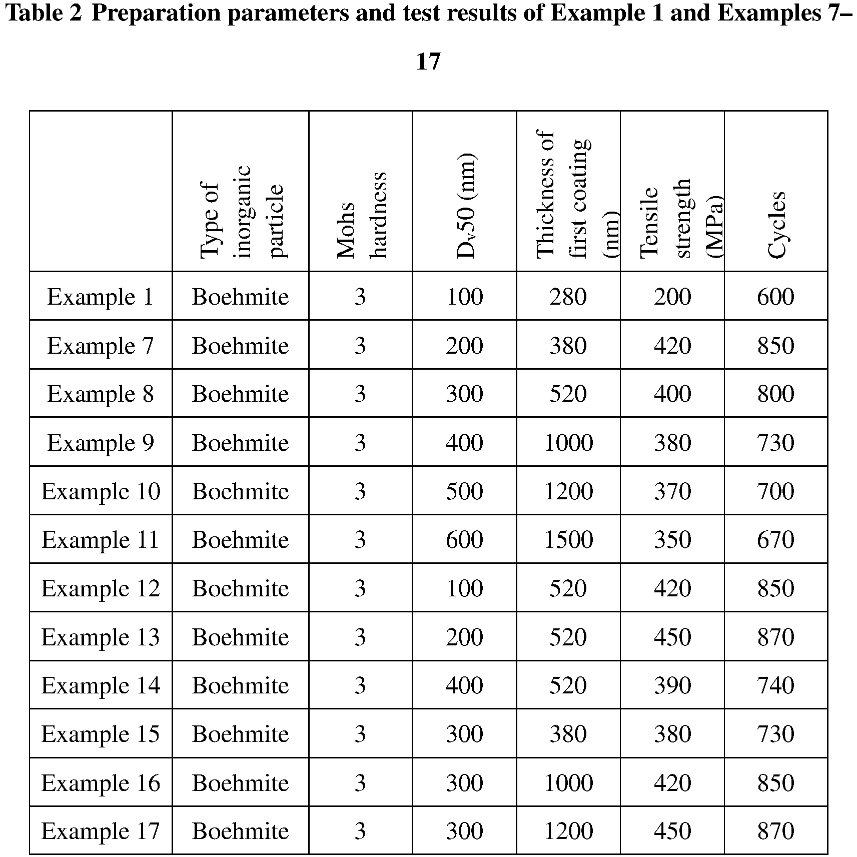

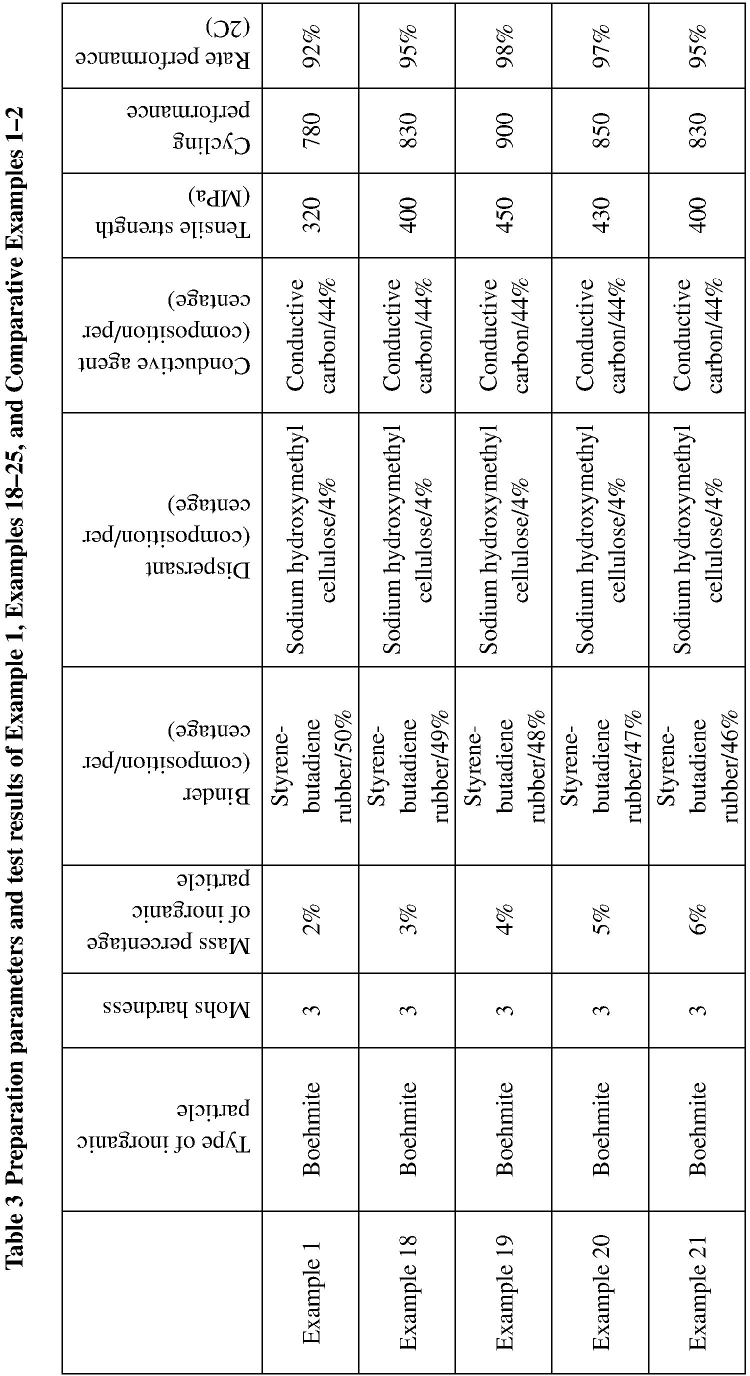

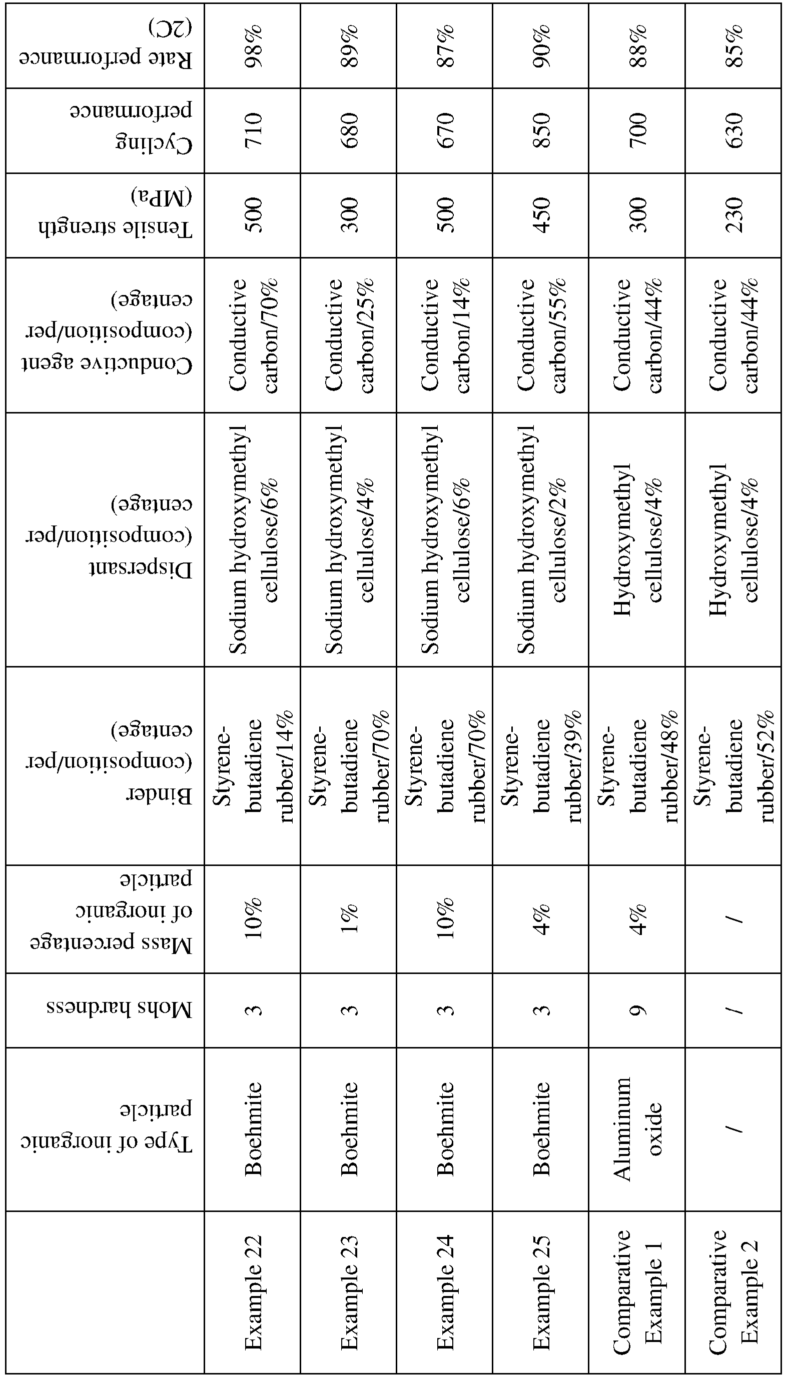

**Table 4 Preparation parameters and test results of Example 1, Examples 26-30, and Comparative Examples 1-2**

| | Type of inorganic particle | Mohs hardness | Cover rate of first coating | Tensile strength (MPa) | Cycling performance |
|---|---|---|---|---|---|
| Example 1 | Boehmite | 3 | 50% | 320 | 700 |
| Example 26 | Boehmite | 3 | 60% | 350 | 750 |
| Example 27 | Boehmite | 3 | 70% | 370 | 780 |
| Example 28 | Boehmite | 3 | 80% | 380 | 800 |
| Example 29 | Boehmite | 3 | 90% | 400 | 830 |
| Example 30 | Boehmite | 3 | 100% | 420 | 850 |
| Comparative Example 1 | Aluminum oxide | 9 | 90% | 290 | 680 |
| Comparative Example 2 | / | / | 90% | 240 | 640 |

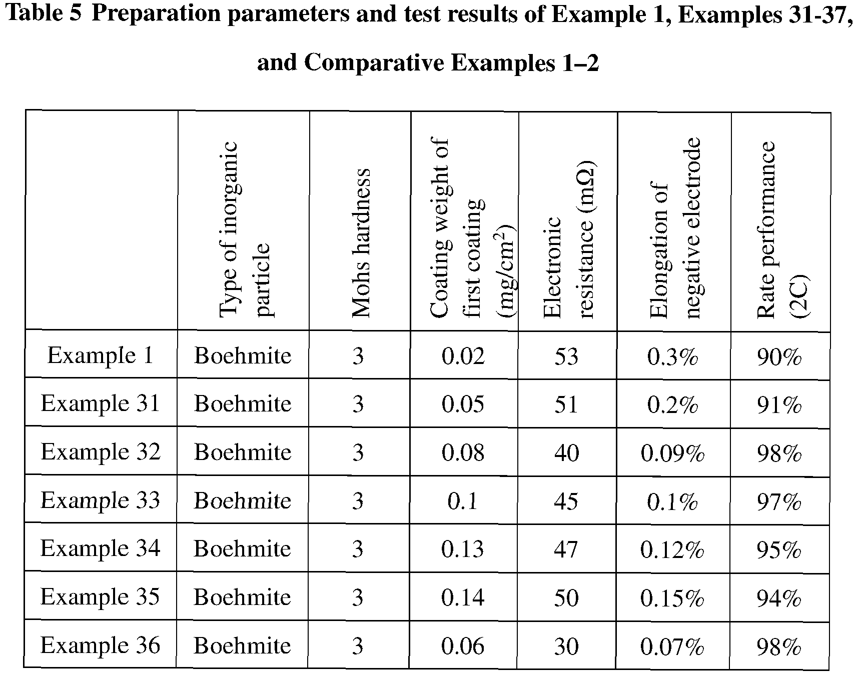

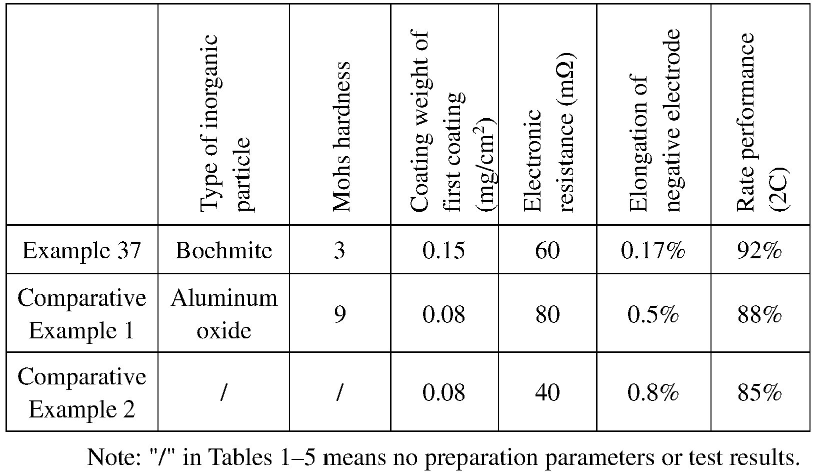

It can be learned from Examples 1-6 and Comparative Examples 1-2 that the introduction of the first coating of this application significantly reduces the elongation rate of the negative electrode, significantly improves the cycling performance and rate performance of the lithium-ion battery, and increases the energy density of the lithium-ion battery.

It can be learned from Example 1 and Examples 7-11 that the median particle size Dᵥ50 of the inorganic particles of this application has an obvious influence on the thickness of the first coating and the tensile strength: The thickness of the first coating increases with Dᵥ50, and the tensile strength of the negative electrode is 400 MPa or above when Dᵥ50 is in the range of 200 nm to 300 nm.

It can be learned from Example 8 and Examples 12-14 that the change in Dᵥ50 of the inorganic particles influences the tensile strength of the negative electrode and the cycling performance of the lithium-ion battery, and that the tensile strength of the negative electrode and the cycling performance of the lithium-ion battery can be effectively improved as long as Dᵥ50 of the inorganic particles is within the range of this application.

It can be learned from Example 8 and Examples 15-17 that the change in the thickness of the first coating influences the tensile strength of the negative electrode and the cycling performance of the lithium-ion battery, and that the tensile strength of the negative electrode and the cycling performance of the lithium-ion battery can be effectively improved as long as the thickness of the first coating is within the range of this application.

It can be learned from Example 1, Examples 18-25, and Comparative Examples 1-2 that the introduction of the first coating of this application can significantly improve the tensile strength of the negative electrode and the cycling performance or rate performance of the lithium-ion battery, and increase the energy density of the lithium-ion battery, and that the tensile strength of the negative electrode and the cycling performance and rate performance of the lithium-ion battery change with the percentage of the inorganic particles, the binder, the dispersant, and the conductive agent in the first coating.

It can be learned from Example 1, Examples 26-30, and Comparative Examples 1-2 that the tensile strength of the negative electrode and the cycling performance of the lithium-ion battery are improved with the cover rate of the first coating.

It can be learned from Example 1, Examples 31-37, and Comparative Examples 1-2 that the negative electrode including the first coating of this application has a lower elongation rate, and hence the corresponding lithium-ion battery has higher rate performance. Therefore, the energy density of the lithium-ion battery is improved.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, comprising a negative electrode; wherein the negative electrode comprises a current collector, a first coating, and a second coating; the second coating is provided on at least one surface of the current collector, and the first coating is provided between the current collector and the second coating;
the first coating comprises inorganic particles; a Mohs hardness of the inorganic particles being 2 to 7.

2. The electrochemical apparatus according to claim 1, wherein the inorganic particles comprise at least one of boehmite, aluminum powder, quartz sand, apatite, nanoceramics, or zircon.

3. The electrochemical apparatus according to claim 1, wherein a median particle size Dᵥ50 of the inorganic particles is 100 nm to 600 nm.

4. The electrochemical apparatus according to claim 1, wherein the first coating further comprises a conductive agent, a binder, and a dispersant; and based on total mass of the first coating, a mass ratio of the inorganic particles, the conductive agent, the binder, and the dispersant is (1%-10%):(14%-70%):(14%-70%):(2%-6%).

5. The electrochemical apparatus according to claim 4, wherein the conductive agent comprises at least one of a zero-dimensional conductive agent or a one-dimensional conductive agent.

6. The electrochemical apparatus according to claim 5, wherein at least one of the following characteristics is satisfied:
the zero-dimensional conductive agent comprising at least one of conductive carbon black, acetylene black, or Ketjen black, and a Dᵥ50 of the zero-dimensional conductive agent being smaller than 400 nm; or
the one-dimensional conductive agent comprising at least one of conductive carbon tube or conductive carbon rod, and an average diameter of the one-dimensional conductive agent being smaller than 400 nm.

7. The electrochemical apparatus according to claim 4, wherein the binder comprises at least one of styrene-butadiene rubber, polyacrylic acid, polyvinyl alcohol, polyethylene glycol, polyacrylate ester, polyvinylidene fluoride, polyvinyl chloride, formaldehyde resin, cyclodextrin, or cyanoacrylate.

8. The electrochemical apparatus according to claim 4, wherein the dispersant comprises at least one of sodium hydroxymethyl cellulose, lithium hydroxymethyl cellulose, sodium alginate, propylene glycol alginate, methylcellulose, starch sodium phosphate, sodium carboxymethyl cellulose, sodium alginate protein, casein, sodium polyacrylate, polyoxyethylene, or polyvinylpyrrolidone.

9. The electrochemical apparatus according to claim 1, wherein a tensile strength of the negative electrode is 200 MPa to 500 MPa.

10. The electrochemical apparatus according to claim 1, wherein a thickness of the first coating is 280 nm to 1500 nm.

11. The electrochemical apparatus according to claim 1, wherein 0.02 mg/cm² ≤ X ≤ 0.15 mg/cm²; X is a coating weight of the first coating.

12. The electrochemical apparatus of claim 1, wherein a cover rate of the first coating is 50% to 100%.

13. The electrochemical apparatus according to claim 1, wherein an electronic resistance of the negative electrode is 30 mΩ to 60 mΩ.

14. The electrochemical apparatus according to claim 1, wherein an elongation rate of the negative electrode is 0.05% to 1%.

15. An electronic apparatus comprising the electrochemical apparatus according to any one of claims 1 to 14.
